Europäisches Patentamt

European Patent Office

Office européen des brevets

(19)

(11) Veröffentlichungsnummer: **0 047 391**
**B2**

(12)

# NEUE EUROPÄISCHE PATENTSCHRIFT

(45) Veröffentlichungstag der neuen Patentschrift:
21.06.89

(51) Int. Cl.⁴: **A 22 C 13/00**

(21) Anmeldenummer: **81105975.7**

(22) Anmeldetag: **29.07.81**

(54) Schlauchförmige Verpackungshülle, insbesondere künstliche Wursthaut, aus Cellulosehydrat, Verfahren zu ihrer Herstellung und ihre Verwendung.

(30) Priorität: **08.08.80 DE 3030035**

(43) Veröffentlichungstag der Anmeldung:
**17.03.82 Patentblatt 82/11**

(45) Bekanntmachung des Hinweises auf die Patenterteilung:
**09.05.84 Patentblatt 84/19**

(45) Bekanntmachung des Hinweises auf die Entscheidung
über den Einspruch:
**21.06.89 Patentblatt 89/25**

(84) Benannte Vertragsstaaten:
**AT BE CH DE FR GB IT LI LU NL SE**

(56) Entgegenhaltungen:
**DE-A-2 000 462
DE-A-2 437 781
DE-B-1 024 322
FR-A-2 224 068
GB-A-1 201 830
LU-A-56 977
US-A-2 961 323
US-A-3 378 379
US-A-3 937 672**

(73) Patentinhaber: **HOECHST AKTIENGESELLSCHAFT,
Postfach 80 03 20, D-6230 Frankfurt am Main 80
(DE)**

(72) Erfinder: **Hammer, Klaus- Dieter, Dr., An der
Hasenquelle 25, D-6500 Mainz- Mombach (DE)**
Erfinder: **Heinrich, Wolfgang, Dr., Friedrichstrasse
41, D-7335 Salach (DE)**
Erfinder: **Gerigk, Günter, Dr., Wintersteinstrasse 6,
D-6370 Oberursel (DE)**
Erfinder: **Bytzek, Max, Pappelweg 13, D-6200
Wiesbaden- Naurod (DE)**

EP 0 047 391 B2

LIBER, STOCKHOLM 1989

**Beschreibung**

Die Erfindung bezieht sich auf eine schlauchförmige Verpackungshülle von der im Oberbegriff des Anspruchs 1 genannten Art, auf Verfahren zu ihrer Herstellung und ihre Verwendung.

Künstliche Wursthüllen werden bei ihrer bestimmungsgemässen Verwendung vor dem Befüllen mit Wurstmassen üblicherweise gewässert, um ihnen die Geschmeidigkeit zu verleihen, die für beschädigungsfreies Befüllen der Hüllen mit Wurstmasse Voraussetzung ist. Die Wässerung der Hüllen erfolgt durch Einwirken von Wasser einer Temperatur von ca. 40 bis 50°C während einer Dauer von ca. 30 min.

Bei der Herstellung von künstlichen Wursthüllen auf Basis von Cellulosehydrat (US-Patent 2 999 757) wird der Schlauch aus Cellulosehydrat-Gel unter Bedingungen getrocknet, bei denen sich das Schlauchvolumen vergrössert. Bei diesen getrockneten Schlauchhüllen tritt bei der Wässerung vor ihrer bestimmungsgemässen Verwendung eine Flächenverringerung von ca. 3 bis 6 % ein, bezogen auf die Fläche der Schlauchhülle vor der Wässerung. Die gewässerten und dabei geschrumpften Schlauchhüllen werden dann in bekannter Weise mit Wurstmasse gefüllt, indem man diese in die an einem Ende verschlossene Schlauchhülle einpresst und dann das andere Ende der Hülle verschliesst.

Der Erfindung liegt die Aufgabe zugrunde, eine als künstliche Wursthaut für Dauerwürste verwendbare schlauchförmige Verpackungshülle aus einem Trägerschlauch auf Basis von Cellulosehydrat, dessen Wandung wasserunlösliches wärmegehärtetes synthetisches Kondensationsprodukt aufweist, derart auszubilden, dass die schlauchformige Verpackungshülle infolge Wässerung vor ihrer bestimmungsgemässen Verwendung zunächst ihre Abmessungen vergrössert und nach Befüllen mit Wurstmasse und Trocknung dem Füllgut eng anliegt und infolge der baulich strukturellen und chemischen Ausbildung der Verpackungshülle sowie den Struktureigenschaften des Trägerschlauchs praktisch resistent ist gegen enzymatisch bedingten Abbau der den Schlauch bildenden Cellulosehydrat-Moleküle, insbesondere durch Einwirkung von Cellulasen.

Die der Erfindung zugrunde liegende Aufgabe wird gelöst durch die schlauchförmige Verpackungshülle mit den in Anspruch 1 genannten Merkmalen, durch die in den Ansprüchen 3, 9 und 13 angegebenen Verfahren sowie durch die Verwendung gemäss Anspruch 17.

Besondere Ausgestaltungen der schlauchförmigen Verpackungshülle bzw. der Verfahren sind in den Unteransprüchen angegeben.

Der Trägerschlauch auf Basis von Cellulosehydrat ist faserverstärkt. Die Faserverstärkung besteht vorteilhaft aus einer in die Schlauchwandung eingelagerten Faserbahn, insbesondere bevorzugt einer Papierfaserbahn. Der Trägerschlauch kann auch aus einer cellulosehydratimprägnierten Papierfaserbahn bestehen, wobei sich auf der Aussenseite ein faserfreier Cellulosehydratüberzug befindet.

Die Bezeichnung Trägerschlauch auf Basis von Cellulosehydrat umfasst auch Trägerschläuche aus chemisch modifiziertem Cellulosehydrat.

Chemisch modifiziertes Cellulosehydrat ist dadurch charakterisiert, dass Cellulosehydratmoleküle durch polyfunktionelle organische chemische Verbindungen miteinander vernetzt sind. Die chemische Vernetzung der Cellulosehydratmoleküle erfolgt durch ein chemisches Vernetzungsmittel, das wenigstens zwei reaktionsfähige N-Methylolgruppen im Molekül aufweist, die befähigt sind, mit reaktionsfähigen Gruppen von Cellulosehydratmolekülen zu reagieren. Besonders geeignet sind cyclische Harnstoffverbindungen mit wenigstens zwei N-Methylolgruppen im Molekül, beispielsweise folgende cyclische Harnstoffderivate, die in der US-A-3 937 672 als chemische Verbindungen zur Vernetzung von Cellulosehydratmolekülen beschrieben sind: Dimethylol-äthylenharnstoff (1,3-Dimethylolimidazolidon-2), Dimethyloldihydroxy-äthylenharnstoff (1,3-Dimethylol-4,5-dihydroxy-imidazolidon-2), Dimethylol-äthyl-triazinon, 3,5-Dimethylol-3,5-diazatetrahydropyron-4, Tetramethylol-acetylendiharnstoff, Dimethylol-propylenharnstoff, Dimethylol-hydroxy-propylenharnstoff, Dimethylol-tetramethyl-propylenharnstoff und 1-Glykol-monomethyläther-2-dimethylolcarbaminat. Das chemisch modifizierte Cellulosehydrat enthält bezeichnete, bevorzugt polyfunktionelle chemische Verbindungen in einer Menge im Bereich von 0,5 bis 5 Gew.-%, beispielsweise 2 Gew.-%, bezogen auf das Cellulosehydratgewicht.

Das Verfahren zur chemischen Modifizierung von Cellulosehydrat mit Hilfe der genannten chemischen Verbindungen ist ebenfalls in der genannten US-Patentschrift beschrieben.

Das den Trägerschlauch des Erzeugnisses bildende Cellulosehydrat bzw. chemisch modifizierte Cellulosehydrat hat einen Quellwert (Wasserrückhaltevermögen) im Bereich von 80 bis 120 %, vorteilhaft 80 bis 115 %, insbesondere 80 bis 105 %, ganz besonders vorteilhaft 90 bis 100 %. Für das Eintreten des erfindungsgemäss angestrebten Erfolges ist es wesentlich, dass der Quellwert des den Trägerschlauch bildenden Cellulosehydrats kleiner als 120 %, insbesondere nicht grösser als 115 % ist.

Der Quellwert gibt diejenige Menge Wasser bzw. wässerige Lösung in Gewichtsprozent an, bezogen auf das Gewicht des den Trägerschlauch bildenden Cellulosehydrats bzw. chemisch modifizierten Cellulosehydrats, die von dem Material des Trägerschlauchs gebunden werden können.

Der Quellwert wird ermittelt nach DIN 53 814, beschrieben in A. Agster, Färberei- und textiltechnische Untersuchungen, S. 450, Springer-Verlag, 1967, 10. Auflage.

Infolge des niedrigen Quellwertes hat der Trägerschlauch in wässerungsnassem Zustand hohe Formstabilität. Das ihn bildende Cellulosehydrat bzw. chemisch modifizierte Cellulosehydrat ist durch verfestigte Molekularstruktur charakterisiert. Diese Eigenschaften sind Folge eines im Vergleich mit bekannten gattungsgemässen Schläuchen hohen Anteils an kristallinen Bereichen und gegebenenfalls Folge chemischer Verknüpfung von Cellulosehydratmolekülen. Sie sind Voraussetzung dafür, dass das Erzeugnis die erfindungsgewollten, im Anspruch 1 angegebenen Eigenschaften hat; bei bestimmungsgemässer Verwendung des Erzeugnisses als künstliche Wursthaut für Dauerwurst führen dessen Eigenschaften zu dem angestrebten Erfolg. Unter Dauerwurst ist Rohwurst zu verstehen, wie z. B. Cervelatwurst, Schlackwurst, Salami, Pfeffersalami, Plockwurst, Schinkenplockwurst, Katenrauchwurst oder Mettwurst.

Der niedrige Quellwert des den Trägerschlauch bildenden Cellulosehydrats ist Ausdruck dafür, dass der Schlauch einen Anteil kristalliner Bereiche umfasst, der im Vergleich mit üblichen gattungsgemässen Cellulosehydratschlauchhüllen mit höherem Quellwert relativ gross ist. Es wird angenommen, dass in diese kristallinen Schlauchbereiche Wasser oder wässerige Flüssigkeit nicht oder praktisch nicht einzudringen vermag, so dass dort zum chemischen Abbau von Cellulosehydratmolekülen befähigte Enzyme, insbesondere Cellulasen, nicht bzw. praktisch nicht wirksam werden können.

Die Schlauchwand, d.h. die äussere und innere Oberfläche der Verpackungshülle enthält chemische Kondensationsprodukte, die zusätzlich Cellulosehydratmoleküle vor chemischem Abbau durch Enzyme, insbesondere Cellulasen, schützen, in einer Menge, die durch die angegebene Herstellung des Trägerschlauchs bedingt ist.

Die erfindungsgewollten Eigenschaften des Erzeugnisses sind demnach das Ergebnis einer Kombination der beiden oben genannten Massnahmen.

Für das angestrebte Ergebnis ist das chemische Kondensationsprodukt auf der Aussen- und Innenseite des Trägerschlauchs vorhanden. Dadurch, dass auf der Aussen- und auf der Innenseite befindliches Kondensationsprodukt die Schlauchoberfläche teilweise abdeckt, tragt dieses zur Erhöhung der Resistenz des Cellulosehydratschlauchs gegen den Angriff von Cellulosehydrat abbauenden Enzymen bei.

Eine vernachlässigbar dünne Schicht aus bezeichnetem Kondensationsprodukt auf der Oberfläche des Trägerschlauchs bildet keine den Durchgang von Wasserdampf oder Luft hindernde Sperrschicht auf dem Schlauch.

Der Trägerschlauch hat eine Wanddicke, die einem Flächengewicht im Bereich von 80 bis 110 $g/m^2$ entspricht.

Die Verpackungshülle vergrössert bei Wässerung ihre Fläche bzw. ihr Volumen durch Ausdehnung in Richtung ihrer Längsachse und radialer Richtung derart, dass sie bzw. es im Bereich von 2 bis 6 %, insbesondere 3 bis 5 % grösser ist als im ungewässerten Zustand. Unter Wässerung ist zu verstehen, dass man die Verpackungshülle der Einwirkung von Wasser einer Temperatur im Bereich von etwa 40 bis 50° C während einer Zeitdauer von ca. 30 min aussetzt, beispielsweise dadurch, dass man sie in eine mit Wasser gefüllte Wanne einlegt.

Zur Ermittlung der Veränderungen der Abmessungen des Erzeugnisses nach der Wässerung in nassem Zustand im Vergleich mit den Abmessungen des Erzeugnisses vor der Wässerung geht man von einer trockenen Verpackungshülle (Wassergehalt 5 bis 12 Gew.-%) bestimmter Länge und bestimmten Durchmessers aus, beispielsweise eines Schlauchstücks von 10 cm Länge und einem Durchmesser von 9 cm, und schneidet das Schlauchstück längsaxial auf. Das erhaltene rechteckige Flächengebilde wird in eine mit Wasser von beispielsweise 50° C gefüllte Wanne 30 min lang gewässert. Danach wird das Flächengebilde der Flüssigkeit entnommen, seine flächige Abmessung in nassem Zustand ermittelt und mit seinen Abmessungen vor der Wässerung verglichen.

Als nasser Zustand des rechteckigen Flächengebildes ist der Zustand zu verstehen, in dem sich das jeweilige Probestück unmittelbar nach Beendigung der Einwirkung von Wasser und nach Abkühlen auf Raumtemperatur befindet.

Die Ermittlung der Abmessungen des wie angegeben gewässerten Flächengebildes in nassem Zustand schliesst aus, dass sich seine Abmessungen infolge Wasserverlust beim Trocknen verringern.

Der Trägerschlauch der erfindungsgemässen Verpackungshülle enthält einen Feuchtigkeitsanteil von insgesamt bis 40 Gew.-%, bezogen auf ihr Gesamtgewicht, wobei sie etwa 5 bis 12 Gew.-% Wasser sowie 18 bis 28 Gew.-% bekannte, zur Weichmachung von Cellulosehydrat befähigte chemische Verbindung in Form von Polyolen, insbesondere Glykol, Polyglykol oder Glycerin enthält, jeweils bezogen auf das Gesamtgewicht der Verpackungshülle.

Die Schlauchwandung, d.h. zumindest die innere und äussere Oberfläche des Trägerschlauchs, enthält wärmegehärtetes, wasserunlösliches, synthetisches Kondensationsprodukt, ausgewählt aus einer Gruppe umfassend Kondensationsprodukte aus Harnstoff und Formaldehyd, aus Melamin und Formaldehyd und vorzugsweise aus Epichlorhydrin und Polyamin bzw. Polyamin-Polyamid.

Diese Kondensationsprodukte in der Schlauchwand schützen, wie bereits vorstehend dargelegt, in Kombination mit der besonderen physikalischen Struktur des den Trägerschlauch bildenden Cellulosehydrats, den Schlauch vor enzymatisch bedingtem chemischem Abbau von Cellulosehydratmolekülen durch Mikroorganismen, beispeilsweise durch Cellulasen.

Auf der Aussenseite des Schlauchs befindet sich, herstellungsbedingt, eine Schicht aus einem dieser Kondensationsprodukte, deren Dicke im Vergleich mit der Wanddicke des Trägerschlauchs auf Basis von faserverstärktem Cellulosehydrat vernachlässigbar gering ist und keinen wesentlichen Beitrag zur Formfestigkeit bringt. Die Schicht hat eine Dicke entsprechend einem Flächengewicht im Bereich von 10 bis 100 mg, beispielsweise 80 mg, des bezeichneten Kondensationsproduktes pro m$^2$ Substratoberfläche. Cellulosehydratschläuche, deren Wandung eine Schutzschicht aus Kondensationsprodukt umfasst, sind in der US-A-3 378 379 beschrieben.

Die Erfindung umfasst drei Varianten eines Verfahrens zur Herstellung eines Erzeugnisses der im Anspruch 1 angegebenen Ausbildung.

Die Verfahrensvarianten werden nachstehend beispielhaft beschrieben.


**Verfahrensvariante I**

Ausgangsprodukt für die Durchführung der ersten Variante des erfindungsgemässen Verfahrens ist ein Schlauch aus Cellulosehydrat-Gel, welcher hergestellt aus Viskose durch Koagulation noch keinem Trocknungsvorgang unterworfen wurde. Die Wand des Schlauchs enthält eine dem Quellwert im Bereich von 280 bis 320 %, beispielsweise 300 %, des den Schlauch bildenden Cellulosehydrat-Gels entsprechende Menge wässeriger Lösung einer chemischen Verbindung, die zur Weichmachung von Cellulosehydrat befähigt ist.

Die wässerige Lösung enthält den Weichmacher in einer Menge im Bereich von 8 bis 12 Gew.-%, vorteilhaft 10 Gew.-%, bezogen auf ihr Gesamtgewicht.

Im Rahmen der vorliegenden Erfindungsbeschreibung umfasst die Bezeichnung Weichmacher für Cellulosehydrat aliphatische Polyhydroxyverbindungen, insbesondere Polyole, ausgewählt aus einer Gruppe umfassend Glycerin, Glykol sowie Polyglykol beispielsweise Polyglykol 2000.

Der Schlauch aus Cellulosehydrat-Gel ist beispielsweise faserverstärkt, er besitzt eine in seine Wandung eingelagerte Papierfaserbahn.

Genannte Schläuche per se sowie deren Herstellung sind Stand der Technik.

Die Aussenwand des Trägerschlauchs umfasst eine Imprägnierung, die

a) aus einem wasserlöslichen Vorkondensat aus Harnstoff und Formaldehyd, oder

b) aus einem wasserlöslichen Vorkondensat aus Formaldehyd und Melamin, oder

c) aus einem wasserlöslichen Vorkondensat aus Epichlorhydrin und Polyamin oder Polyamin-Polyamid besteht.

Die genannten Vorkondensate sind durch Einwirkung von Wärme hitzehärtbar, wobei sie in wasserunlösliche Produkte überführt werden.

In wärmegehärtetem Zustand werden die Reaktionsprodukte als wärmegehärtete wasserunlösliche synthetische Kondensationsprodukte bezeichnet.

Bei der beispielhaften Verfahrensdurchführung befindet sich auf der Aussenseite des Schlauchs aus Cellulosehydrat-Gel vorteilhaft wasserlösliches Vorkondensat aus Epichlorhydrin und Polyamin-Polyamid.

Wasserlösliche Epichlorhydrin-Polyamin-Polyamid-Vorkondensate sind in der US-A-2 926 154 und US-A-3 378 379, wasserlösliche Harnstoff-Formaldehyd-Vorkondensate in der US-A-2 616 874 und wasserlösliche Melamin-Formaldehyd-Vorkondensate in der US-A-2 796 362 und US-A-2 345 543 beschrieben.

Die Imprägnierung an der Aussenseite des Schlauchs aus Cellulosehydrat-Gel mit den angegebenen chemischen Verbindungen erfolgt beispielsweise dadurch, dass man die Schlauchaussenseite mit einer wässerigen Flüssigkeit besprüht, die eines der genannten Vorkondensate enthält oder den Schlauch beispielsweise fortlaufend durch eine Wanne führt, die mit wässeriger Imprägnierflüssigkeit gefüllt ist. Beispielsweise besteht die Flüssigkeit aus einer wässerigen Lösung, die 10 bis 20 g/l, beispielsweise 15 g/l, Epichlorhydrin-Polyamin-Polyamid-Vorkondensat gelöst enthält. Die Beaufschlagung der Aussenseite des Schlauchs mit der Imprägnierflüssigkeit erfolgt in der Weise, dass man auf die Schlauchoberfläche eine solche Menge der bezeichneten Flüssigkeit aufbringt, dass deren gelöster Anteil in einer Menge im Bereich von 10 bis 100 mg/m$^2$, beispielsweise 80 mg/m$^2$, auf der Schlauchoberfläche vorhanden ist.

Der Schlauch aus Cellulosehydrat-Gel, der beispielsweise einen Durchmesser von 90 mm aufweist, wird zur Verfahrensdurchführung fortlaufend in mit Stützluft gefülltem Zustand einer ersten Wärmebeaufschlagung unterworfen, wobei man auf ihn keine längsweise wirkende Zugkraft ausüben lässt, so dass der jeweils wärmebeaufschlagte integrale Schlauchabschnitt in der Lage ist, radial sowie längsweise zu schrumpfen.

Der Druck der Stützluft im Schlauchhohlraum im Bereich der Wärmeeinwirkungszone hat einen Wert bzw. wird auf einen Wert eingestellt, dass der Schlauch während der Wärmeeinwirkung in der Lage ist, radial und längsweise zu schrumpfen.

Der jeweils die Wärmeeinwirkungszone durchlaufende Teil des Schlauchs unterliegt anfangs der Einwirkung von Wärme einer Temperatur im Bereich von 70 bis 90° C und an ihrem Ende einer Temperatur im Bereich von 100 bis 130° C.

Die gesamte Zeitdauer, während der auf den Schlauch die Wärme einwirkt, beträgt bevorzugt 1,5 bis 3 min.

Die längsaxial zugspannungsfreie Führung des Schlauchs durch die erste Wärmeeinwirkungszone erfolgt in der Weise, dass seine Fortbewegungsgeschwindigkeit innerhalb der Wärmeeinwirkungszone verzögert wird. Vorzugsweise ist die Fortbewegungsgeschwindigkeit bei Austritt des Schlauchs aus der Wärmeeinwirkungszone um ca. 2 bis 10 %, insbesondere 3 bis 6 %, kleiner als bei Eintritt in diese Zone. Beispielsweise beträgt die Fortbewegungsgeschwindigkeit des Schlauchs bei Eintritt in die Wärmeeinwirkungszone 10 m/min, während der Schlauch bei Austritt aus dieser eine Fortbewegungsgeschwindigkeit von 9,5 m/min hat.

Nach Austritt des Schlauchs aus der ersten Wärmeeinwirkungszone beträgt der Wassergehalt in seiner Wandung beispielsweise 8 bis 10 Gew.-%, und sein Anteil an Weichmachern liegt im Bereich von 18 bis 24 Gew.-%, jeweils bezogen auf das Schlauchgesamtgewicht. Der Schlauch hat nach der ersten Wärmebeaufschlagung einen Quellwert im Bereich zwischen 120 bis 140 %, beispielsweise einen solchen von 130 %.

Die erste Wärmebeaufschlagung unter den genannten Bedingungen kann beispielsweise wie folgt realisiert werden:

Der mit Vorkondensat imprägnierte Schlauch aus Cellulosehydrat-Gel wird fortlaufend durch einen geraden Heiztunnel mit horizontal verlaufender Längsachse geführt. Der Heiztunnel kann beispielsweise auch mit Infrarotstrahlung emittierenden elektrischen Heizelementen ausgerustet sein. Die angegebene Verzögerung der Fortbewegungsgeschwindigkeit des Schlauchs erfolgt im Heiztunnel beispielsweise dadurch, dass man den Schlauch bei Eintritt in den Heiztunnel über seine gesamte Breite flach zusammenpresst und ihn dabei zugleich in Richtung zum Ende des Heiztunnels fortbewegt. Das Flachlegen erfolgt z. B. dadurch, dass man den Schlauch durch den Quetschspalt eines in Fortbewegungsrichtung des Schlauchs ersten, am Anfang des Heiztunnels angeordneten Quetschwalzenpaares führt, dessen Walzen drehbarsowie antreibbar ausgebildet sind. Die Walzen werden beispielsweise durch Motoren angetrieben.

Im Bereich des Questchspaltes des ersten Quetschwalzenpaares stehen die Aussenseiten des flach zusammengepressten Schlauchs in kraftschlussiger Verbindung mit den Umfangsflächen der angetriebenen Walze des ersten Quetschwalzenpaares. Die längsweise Förderung des Schlauchs erfolgt durch die kraftschlüssige Verbindung seiner Oberflächen mit den Umfangsflächen der rotierenden Walzen des ersten Quetschwalzenpaares.

Der aus dem Quetschspalt des ersten Quetschwalzenpaares austretende Schlauch wird durch den Heiztunnel und dann durch den Quetschspalt eines am Ende des Heiztunnels angeordneten zweiten Quetschwalzenpaares mit angetriebenen Walzen geführt. Im Bereich des Quetschspaltes des zweiten Quetschwalzenpaares wird der Schlauch erneut entlang einer schmalen Zone flach zusammengepresst. Im Bereich des Quetschspalts des zweiten Quetschwalzenpaares befindet sich die Aussenseite des Schlauchs in kraftschlüssigem Kontakt mit den Umfangsflächen der jeweils mit gleicher Umfangsgeschwindigkeit rotierenden Walzen des zweiten Quetschwalzenpaares, wobei der Schlauch aus dem Heiztunnel gefördert wird.

Die Umfangsgeschwindigkeit der angetriebenen Walzen des zweiten Quetschwalzenpaares ist im Bereich von 2 bis 10 %, bevorzugt 3 bis 6 %, beispielsweise 4 %, kleiner als die Umfangsgeschwindigkeit der angetriebenen Walzen des ersten Quetschwalzenpaares.

Die Umfangsgeschwindigkeit der angetriebenen Walzen des ersten Quetschwalzenpaares beträgt beispielsweise 10 m/min, während die Umfangsgeschwindigkeit der Walzen des zweiten Quetschwalzenpaares 9,5 m/min beträgt. Die jeweilige Geschwindigkeit, mit der der Schlauch von den Quetschwalzenpaaren gefördert wird, entspricht den Umfangsgeschwindigkeiten der Walzen der jeweiligen Walzenpaare.

Der im Bereich zwischen dem Quetschspalt des ersten Quetschwalzenpaares und dem des zweiten Quetschwalzenpaares befindliche Schlauchteil ist mit Stützluft gefüllt.

Das erste Quetschwalzenpaar am Eingang des Heiztunnels ist zu dem zweiten Quetschwalzenpaar am Ausgang des Heiztunnels vorzugsweise derart angeordnet, dass die Längsachse der durch die Walzenspalte der Quetschwalzenpaare legbare gemeinsame Walzenspaltebene mit der geraden Längsachse des Trockentunnels praktisch übereinstimmt. Die Quetschwalzenpaare sind dabei vorteilhaft in der Weise angeordnet, dass sich der Quetschspalt des ersten Quetschwalzenpaares unmittelbar am Anfang und der Quetschspalt des zweiten Quetschwalzenpaares unmittelbar am Ende des Heiztunnels befindet.

Der Bereich zwischen dem Quetschspalt des ersten Quetschwalzenpaares und dem des zweiten Quetschwalzenpaares ist diejenige Zone, innerhalb welcher der Schlauch aus Cellulosehydrat-Gel erstmalig mit Wärme beaufschlagt wird.

Der unter den angegebenen Bedingungen erstmals mit Wärme beaufschlagte und getrocknete Schlauch wird dann mit Wasser durchfeuchtet.

Der Schlauch enthält in seiner Wand nach der Befeuchtung einen Flüssigkeitsanteil im Bereich von 108 bis 126 Gew.-%, beispielsweise 117 Gew.-%, bezogen auf sein Gesamtgewicht, wobei 8 bis 12 Gew.-%, beispielsweise 10 Gew.-%, der Flüssigkeitsmenge in der Schlauchwand aus Weichmacher für Cellulosehydrat, beispielsweise Glycerin, besteht.

Der Anteil an Flüssigkeit in der Schlauchwand entspricht dem Quellwert des aus Cellulosehydrat bestehenden Schlauchs.

Die Innenseite des Schlauchs wird dann mit Vorkondensat enthaltender Flüssigkeit beschichtet, die bezüglich ihrer qualitativen und quantitativen Zusammensetzung der entspricht, mit der die Aussenseite des Schlauchs aus Cellulosehydrat-Gel bereits präpariert wurde. Die Innenbeschichtung des Schlauchs mit der Flüssigkeit kann beispielsweise mit der in der US-A-3 378 379 beschriebenen Innenbeschichtungstechnologie durchgeführt werden.

Der wie angegeben befeuchtete und auf seiner Innenseite mit Vorkondensat enthaltender Flüssigkeit behandelte Schlauch wird dann einer zweiten Wärmeeinwirkung unterworfen und dabei getrocknet.

Bei der zweiten Wärmeeinwirkung wird der Schlauch längsaxial fortlaufend mit im wesentlichen gleichbleibender Geschwindigkeit durch eine Wärmeeinwirkungszone hindurchgeführt. Die Schlauchfortbewegungsgeschwindigkeit ist somit bei Eintritt in die Wärmeeinwirkungszone und bei Austritt aus dieser Zone gleich gross oder ist bei Austritt nur geringfügig grösser, höchstens 2 %, beispielsweise 1 %, grösser als bei Eintritt in diese Zone.

Jeder Schlauchteil ist dabei während einer Gesamtdauer im Bereich von 1,5 bis 3 min der Einwirkung von Wärme ausgesetzt.

Die Temperatur bei der zweiten Wärmeeinwirkung nimmt in der Wärmeeinwirkungszone in Schlauchfortbewegungsrichtung zu und beträgt an deren Anfang etwa 70 bis 90°C, beispielsweise 80°C, an deren Ende etwa 100 bis 130°C, beispielsweise 120°C. Der Schlauch hat nach der zweiten Beaufschlagung mit Wärme einen Quellwert im Bereich von etwa 90 bis 115 %, beispielsweise 95 %.

Die zweite Wärmebeaufschlagung und Trocknung des Schlauchs wird demnach unter Einhaltung der vorstehend angegebenen Temperaturen und der Wärmeeinwirkungsdauer durchgeführt, die denen entsprechen, die bei der Durchführung der ersten Trocknung zur Anwendung gelangen.

Bei der zweiten Trocknung sind jedoch die Umfangsgeschwindigkeiten der Walzen des ersten Quetschwalzenpaares gleich den Umfangsgeschwindigkeiten der Walzen des zweiten Quetschwalzenpaares. Die Umfangsgeschwindigkeit der Walzen der Quetschwalzenpaare beträgt beispielsweise 10 m/min. Die Umfangsgeschwindigkeit der Walzen des zweiten Quetschwalzenpaares kann aber auch geringfügig, höchstens 2 %, beispielsweise 1 %, grösser sein als die der Walzen des ersten Quetschwalzenpaares. Die Fortbewegungsgeschwindigkeit des Schlauchs bei Austritt aus dem Quetschspalt der Quetschwalzenpaare entspricht dabei der Umfangsgeschwindigkeit der Quetschwalzen und ist bei Austritt aus dem Walzenspalt des zweiten Quetschwalzenpaares gleich oder höchstens 2 %, beispielsweise 1 %, grösser als bei Austritt aus dem Spalt des ersten Quetschwalzenpaares.

Der getrocknete Schlauch hat einen Wassergehalt im Bereich von 5 bis 12 Gew.-%, beispielsweise 10 Gew.-%, bezogen auf sein Gesamtgewicht.

Der Schlauch wird gegebenenfalls mit Wasser befeuchtet, um einen bestimmten Endwassergehalt in der Schlauchwand herzustellen, der 5 bis 12 Gew.-%, beispielsweise 10 Gew.-%, bezogen auf das Gesamtgewicht des Schlauchs beträgt.

Zur Befeuchtung des Schlauchs mit Wasser wird er beispielsweise fortlaufend durch eine mit Wasser gefüllte Wanne geführt.

Das Schrumpfverhalten der Verpackungshülle bei ihrer bestimmungsgemässen Verwendung als Wursthülle nach Wässerung ist im wesentlichen Folge der besonderen Führung des Schlauchs durch die Wärmeeinwirkungszone bei der ersten Wärmebeaufschlagung des Schlauchs. Der erfindungsgemäss angestrebte niedrige Quellwert der Verpackungshülle ergibt sich aus den kombinierten besonderen thermischen Bedingungen, unter denen die erste und zweite Wärmebeaufschlagung durchgeführt wird.

### Verfahrensvariante II

Die zweite Variante des erfindungsgemässen Verfahrens wird beispielhaft nachfolgend erläutert.

Man geht aus von einem faserverstärkten Schlauch, der aus Cellulosehydrat-Gel besteht, der zuvor noch keiner Wärmebehandlung unterworfen wurde und einen Quellwert im Bereich von 280 bis 320 Gew.-%, beispielsweise 300 Gew.-%, besitzt. In der Schlauchwand ist eine dem Quellwert des Cellulosehydrat-Gels entsprechende Menge wässeriger Lösung vorhanden, welche Weichmacher für Cellulosehydrat, beispielsweise Glycerin, sowie eine wenigstens zwei N-Methylolgruppen im Molekül aufweisende organische chemische Verbindung enthält, ausgewählt aus einer Gruppe chemischer Verbindungen umfassend cyclische Harnstoffverbindungen mit zwei N-Methylolgruppen im Molekül, beispielsweise Dimethylol-dihydroxy-äthylenharnstoff (1,3-Dimethylol-4,5-dihydroxy-imidazolinon-2).

Die wässerige Lösung enthält als primären Weichmacher Glycerin in einer Menge im Bereich von 8 bis 12 Gew.-%, beispielsweise 10 Gew.-%.

Die wässerige Lösung enthält die zur chemischen Verknüpfung von Cellulosehydrat befähigten bifunktionellen Verbindungen mit wenigstens zwei N-Methylolgruppen im Molekül, ausgewählt aus der Gruppe der angegebenen chemischen Verbindungen, in einer Menge im Bereich von 0,5 bis 5 Gew.-%, beispielsweise 2,5 Gew.-%, bezogen auf das Gewicht der wässerigen Lösung. Die wie vorstehend angegeben bifunktionellen chemischen Verbindungen sind in der US-A-3 937 672 beschrieben.

Der Schlauch enthält die bifunktionellen, wenigstens zwei N-Methylolgruppen im Molekül aufweisenden chemischen Verbindungen in einer Menge von beispielsweise 1 bis 3 Gew.-%, bezogen auf das Gesamtgewicht des Cellulosehydrats im Schlauch.

Zu dieser Vorstufe des Verfahrensproduktes gelangt man, indem man beispielsweise auf den faserverstärkten Schlauch aus Cellulosehydrat-Gel, hergestellt aus Viskose durch Koagulation, welcher noch nicht getrocknet worden war, eine wässerige Flüssigkeit zur Einwirkung bringt, die im Bereich von 5 bis 12 Gew.-%, beispielsweise 10 Gew.-%, bezogen auf ihr Gesamtgewicht zur Weichmachung von Cellulosehydrat befähigter Verbindung, beispielsweise Glycerin enthält. Diese Lösung enthält zusätzlich organischchemische Verbindung mit wenigstens zwei N-Methylolgruppen im Molekül, beispielsweise Dimethylol-dihydroxyäthylenharnstoff in einer Menge im Bereich von 0,5 bis 5 Gew.-%, insbesondere 1,5 bis 3 Gew.-%, bezogen auf das Gesamtgewicht der Lösung.

Zur Durchführung dieser Weichmacherbehandlung wird der Schlauch aus Cellulosehydrat-Gel fortlaufend durch eine mit der Flüssigkeit gefüllte Wanne geführt.

Die Aussen- und Innenseite des wie vorstehend behandelten Schlauchs wird dann jeweils mit einer ein wasserlösliches Vorkondensat enthaltenden Flüssigkeit behandelt, die in ihrer Zusammensetzung bei der ersten Verfahrensvariante beschrieben wurde. Die Behandlung erfolgt beispielsweise wie bei der ersten Verfahrensvariante angegeben.

Der Schlauch aus Cellulosehydrat-Gel wird dann der Einwirkung von Wärme unterworfen und getrocknet, wobei die gleichen Bedingungen, insbesondere bezüglich Temperatur, Schlauchgeschwindigkeit und Wärmeeinwirkungszeit wie bei der ersten Wärmebeaufschlagung nach der ersten Verfahrensvariante einzuhalten sind.

Der Schlauch hat bereits nach dieser Wärmebeaufschlagung einen Quellwert im Bereich von 90 bis 115 %, beispielsweise 100 %.

Gegebenenfalls wird der Schlauch in der Weise mit Wasser befeuchtet, wie dies bei der Erläuterung der ersten Verfahrensvariante angegeben ist.

Das angestrebte Schrumpfverhalten der Verpackungshülle bei seiner bestimmungsgemässen Verwendung nach Wässerung ist Folge der besonderen Führung des Schlauchs durch die Wärmeeinwirkungszone unter Schrumpfung des Schlauchs zulassenden Bedingungen.

Der erfindungsgemäss angestrebte niedrige Quellwert des Verfahrenserzeugnisses ist Folge des chemischen Aufbaus des Trägerschlauchs. Bei der Wärmebeaufschlagung werden Cellulosehydratmoleküle des Schlauchs durch die bifunktionelle chemische Verbindung in der Schlauchwand chemisch verknüpft, wodurch ein niedriger Quellwert des Schlauchs erreicht wird.

**Verfahrensvariante III**

Die Durchführung der dritten Variante des erfindungsgemässen Verfahrens unterscheidet sich von der Durchführung der zweiten Variante des Verfahrens in folgenden Punkten:

1. Der Ausgangsschlauch entspricht dem Schlauch aus Cellulosehydrat-Gel der Verfahrensvariante 1, d.h., er ist nicht chemisch modifiziert. Seine Aussen- und Innenfläche ist mit einer Weichmacher enthaltenden Flüssigkeit und mit einer Vorkondensat enthaltenden Flüssigkeit behandelt.

2. Die auf den Schlauch am Anfang der Wärmeeinwirkungszone einwirkende Wärme hat eine Temperatur im Bereich von 90 bis 110° C, bevorzugt etwa 100° C, und am Ende eine Temperatur im Bereich von 140 bis 160° C, bevorzugt etwa 150° C; der Schlauch unterliegt während einer Gesamtzeit im Bereich von 3 bis 8 min, beispielsweise 6 min, der Einwirkung von Wärme. Die Wärmeeinwirkung erfolgt analog zu der Verfahrensvariante unter Schrumpfung des Schlauchs zulassenden Bedingungen.

Der Schlauch hat nach der Wärmeeinwirkung einen Quellwert im Bereich von 90 bis 115 %, beispielsweise 100 %. Eine zweite Wärmebehandlung ist nicht erforderlich.

Der niedrige Quellwert und das angestrebte Schrumpfverhalten der nach der dritten Verfahrensvariante hergestellten Verpackungshülle ist bei deren bestimmungsgemässer Verwendung als Wursthülle Folge der speziellen Wärmebehandlung.

Bei den drei Verfahrensvarianten zur Herstellung der Verpackungshülle ist es für die erste Verfahrensvariante wesentlich, dass der Ausgangsschlauch unter Schrumpfung zulassenden Bedingungen zunächst der aufgezeigten ersten thermischen Behandlung mit bestimmter Wärmeeinwirkungsdauer und Wärmeeinwirkungstemperatur unterzogen wird, danach befeuchtet und anschliessend unter praktisch zugspannungsfreien Bedingungen einer zweiten Wärmebeaufschlagung unter den angegebenen Bedingungen unterworfen wird, wobei durch jede der beiden Wärmebeaufschlagungsschritte der Quellwert des den Schlauch bildenden Cellulosehydrats jeweils von einem Anfangswert auf einen diesem gegenüber geringeren Endwert reduziert wird, wobei der Anfangsquellwert des Schlauchs zu Beginn des zweiten Wärmeeinwirkungsschritts dem Quellwert des Schlauchs nach der ersten Wärmebeaufschlagung entspricht.

Für die erfindungsgemäss gewollten Eigenschaften des Verfahrenserzeugnisses ist es bei der Durchführung der zweiten Verfahrensvariante wesentlich, dass der Ausgangsschlauch aus chemisch modifiziertem Cellulosehydrat besteht und der Schlauch der einzigen Wärmebeaufschlagung unter Schrumpfung zulassenden Bedingungen bei den genannten Temperaturen und Wärmeeinwirkungszeiten unterworfen wird.

Für das Eintreten des erfindungsgewollten Effektes ist es bei der Durchführung der dritten Verfahrensvariante wesentlich, dass der Ausgangsschlauch des angegebenen chemischen Aufbaus der einzigen intensiven Wärmebeaufschlagung unter Schrumpfung zulassenden Bedingungen unterworfen wird.

## Patentansprüche

1. Schlauchförmige Verpackungshülle, insbesondere künstliche Wursthaut, bestehend aus einem Trägerschlauch auf Basis von faserverstärktem Cellulosehydrat, der in seiner Wandung 5 bis 12 Gew.-% Wasser, 18 bis 28 Gew.-% zur Weichmachug von Cellulosehydrat befähigter chemischer Substanz, jeweils bezogen auf das Gesamtgewicht des Trägerschlauchs, enthält, mit einer Beschichtung aus wasserunlöslichem, wärmegehärtetem, synthetischem Kondensationsprodukt auf Basis von Harnstoff-Formaldehyd, Melamin-Formaldehyd, Epichlorhydrin-Polyamin oder Epichlorhydrin-Polyamin-Polyamid, dadurch gekennzeichnet, daß der Trägerschlauch eine Wanddicke entsprechend einem Flächengewicht von 80 bis 110 g/m² hat, daß die Innen- und Außenwand des Schlauchs auf Basis von Cellulosehydrat das Kondensationsprodukt enthält, wobei die Innen- und Außenschicht eine Dicke entsprechend einem Flächengewicht von 10 bis 100 mg/m² Substratoberfläche hat, der Schlauch einen Quellwert im Bereich von 80 bis 120 % besitzt, wobei die schlauchförmige Verpackungshülle nach Wässerung bei etwa 40 bis 50° C über eine Zeitdauer von etwa 30 min und anschließendem Abkühlen auf Raumtemperatur in nassem Zustand Abmessungen in Richtung ihrer Längsachse und in radialer Richtung hat, die um 2 bis 6 % größer sind als vor der Wässerung.

2. Verpackungshülle nach Anspruch 1, dadurch gekennzeichnet, dass der Trägerschlauch aus durch organiche chemische Verbindung mit wenigstens zwei N-Methylolgruppen im Molekül chemisch modifiziertem Cellulosehydrat besteht.

3. Verfahren zur Herstellung der Verpackungshülle nach Anspruch 1, bei dem man die Oberfläche eines Weichmacher enthaltenden Schlauches aus Cellulosehydrat-Gel, hergestellt durch Koagulation von Viskose der zuvor noch keiner Wärmebehandlung unterzogen worden war, mit der wasserlösliches Vorkondensat enthaltenden Flüssigkeit behandelt und den Schlauch durch Wärmeeinwirkung trocknet, dadurch gekennzeichnet, dass man die Aussenseite und gegebenenfalls auch die Innenseite des weichmacherhaltigen Schlauchs aus Cellulosehydrat-Gel mit der Vorkondensat enthaltenden Flüssigkeit behandelt, ihn fortlaufend längsaxial durch eine erste Wärmeeinwirkungszone unter Schrumpfung zulassenden Bedingungen führt und dabei trocknet, wobei die einwirkende Temperatur am Anfang der Wärmeeinwirkungszone im Bereich von 70 bis 90° C und an ihrem Ende im Bereich von 100 bis 130° C liegt, gegebenenfalls den Schlauch auf seiner Innenseite mit Vorkondensat enthaltender Flüssigkeit behandelt, sofern nicht bereits vor dem Trocknen geschehen, und den Schlauch fortlaufend durch eine zweite Wärmeeinwirkungszone führt und dabei trocknet, wobei die Schlauchfortbewegungsgeschwindigkeit bei Austritt aus der zweiten Wärmeeinwirkungszone gleich oder höchstens 2 % grösser ist als bei Eintritt in diese Zone.

4. Verfahren nach Anspruch 3, dadurch gekennzeichnet, dass die Fortbewegungsgeschwindigkeit des Schlauches bei Austritt aus der ersten Wärmeeinwirkungszone um 2 bis 10 % kleiner ist als bei Eintritt in diese Zone.

5. Verfahren nach einem der Ansprüche 3 oder 4, dadurch gekennzeichnet, dass man den mit Vorkondensat enthaltender Flüssigkeit auf seiner Aussenseite und gegebenenfalls Innenseite behandelten Schlauch aus Cellulosehydrat-Gel unter Ausbildung des wasserunlöslichen Überzugs aus Kondensationsprodukt und Trocknung in einer ersten Wärmebehandlung durch den Quetschspalt eines in Schlauchfortbewegungsrichtung ersten Quetschwalzenpaares mit angetriebenen, jeweils mit gleicher Umfangsgeschwindigkeit rotierenden Walzen und danach durch den Quetschspalt eines im Abstand vom ersten angeordneten zweiten Quetschwalzenpaares mit angetriebenen, jeweils mit gleicher Geschwindigkeit rotierenden Walzen führt, wobei die Walzen des ersten Quetschwalzenpaares eine Umfangsgeschwindigkeit besitzen, die im Bereich von 2 bis 10 % grösser ist als die Umfangsgeschwindigkeit der Walzen des zweiten Quetschwalzenpaares, und wobei der Schlauch zwischen beiden Quetschwalzenpaaren mit Stützgas gefüllt ist.

6. Verfahren nach einem der Ansprüche 3 bis 5, dadurch gekennzeichnet, dass bei der ersten Wärmeeinwirkung der Schlauch während einer Zeitdauer im Bereich von 1,5 bis 3 min der Einwirkung von Wärme unterliegt.

7. Verfahren nach einem der Ansprüche 3 bis 6, dadurch gekennzeichnet, dass am Anfang der zweiten Wärmeeinwirkungszone eine Temperatur im Bereich von 70 bis 90° C und am Ende im Bereich von 100 bis 130° C vorhanden ist.

8. Verfahren nach einem der Ansprüche 3 bis 7, dadurch gekennzeichnet, dass der Schlauch der zweiten Wärmeeinwirkung während einer Zeitdauer im Bereich von 1,5 bis 3 min unterliegt.

9. Verfahren zur Herstellung der schlauchförmigen Verpackungshülle nach Anspruch 1, bei dem man die Oberfläche eines Weichmacher enthaltenden Schlauches aus Cellulosehydrat-Gel, hergestellt durch Koagulation von Viskose, der zuvor noch keiner Wärmebehandlung unterzogen worden war, mit der wasserlösliches Vorkondensat enthaltenden Flüssigkeit behandelt und den Schlauch durch Wärmeeinwirkung trocknet, dadurch gekennzeichnet, dass man den einen Weichmacher enthaltenden, auf der Aussen- und Innenseite mit Vorkondensat enthaltender Flüssigkeit behandelten Schlauch aus Cellulosehydrat-Gel einer einmaligen Einwirkung von Wärme unter Schrumpfung des Schlauchteils zulassenden Bedingungen unterwirft, wobei am Anfang der Wärmeeinwirkungszone eine Temperatur im Bereich von 90 bis 110° C und am Ende eine Temperatur im Bereich von 140 bis 160° C vorhanden ist.

10. Verfahren nach Anspruch 9, dadurch gekennzeichnet, dass die längsaxiale Fortbewegungsgeschwindigkeit des Schlauchs bei Austritt aus der Wärmebeaufschlagungszone um 2 bis 10 % kleiner ist als bei Eintritt in diese Zone.

11. Verfahren nach einem der Ansprüche 9 oder 10, dadurch gekennzeichnet, dass man den Schlauch aus Cellulosehydrat-Gel durch den Quetschspalt eines in Schlauchfortbewegungsrichtung ersten Quetschwalzenpaares mit angetriebenen, jeweils mit gleicher Umfangsgeschwindigkeit rotierenden Walzen und danach durch den Quetschspalt eines im Abstand vom ersten angeordneten zweiten Quetschwalzenpaares mit angetriebenen, jeweils mit gleicher Geschwindigkeit rotierenden Walzen führt, wobei die Walzen des ersten Quetschwalzenpaares eine Umfangsgeschwindigkeit besitzen, die im Bereich von 2 bis 10 % grösser ist als die Umfangsgeschwindigkeit der Walzen des zweiten Quetschwalzenpaares, und wobei das erste Quetschwalzenpaar den Anfang und das zweite Quetschwalzenpaar das Ende einer Zone bildet, im Bereich derer der Schlauch mit Stützgas gefüllt ist und mit Wärme beaufschlagt wird.

12. Verfahren nach einem der Ansprüche 9 bis 11, dadurch gekennzeichnet, dass der Schlauch der Einwirkung von Wärme während einer Zeitdauer im Bereich von 3 bis 8 min unterliegt.

13. Verfahren zur Herstellung der schlauchförmigen Verpackungshülle nach einem der Ansprüche 1 oder 2, bei dem man einen Schlauch aus Cellulosehydrat-Gel, hergestellt durch Koagulation von Viskose, der zuvor noch keiner Wärmebehandlung unterzogen worden war und der in seiner Wandung zur chemischen Weichmachung von Cellulosehydrat befähigte chemische Verbindungen sowie ein wenigstens zwei N-Methylolgruppen im Molekül aufweisendes chemisches Mittel zur Vernetzung der Cellulosehydrat Moleküle enthält und dessen äussere und innere Oberfläche jeweils mit Vorkondensat enthaltender Flüssigkeit behandelt ist, unter Wärmeeinwirkung trocknet, dadurch gekennzeichnet, dass man den Schlauch aus Cellulosehydrat-Gel der einmaligen Einwirkung von Wärme unter Schrumpfung des Schlauchteils zulassenden Bedingungen unterwirft, wobei er zu Beginn der Wärmebehandlung einer Temperatur im Bereich von 70 bis 90° C und am Ende im Bereich von 100 bis 130° C ausgesetzt wird.

14. Verfahren nach Anspruch 11, dadurch gekennzeichnet, dass die längsaxiale Fortbewegungsgeschwindigkeit des Schlauchs bei Austritt aus der Wärmebeaufschlagungszone um 2 bis 10 % kleiner ist als bei Eintritt in diese Zone.

15. Verfahren nach einem der Ansprüche 13 oder 14, dadurch gekennzeichnet, dass der Schlauch der Einwirkung von Wärme während einer Zeitdauer im Bereich von 1,5 bis 3 min unterliegt.

16. Verfahren nach einem der Ansprüche 13 bis 15, dadurch gekennzeichnet, dass die Wärmeeinwirkung auf den Schlauch innerhalb eines Heiztunnels erfolgt, an dessen Anfang sich ein erstes Quetschwalzenpaar mit angetriebenen Walzen und an dessen Ende sich ein zweites Quetschwalzenpaar mit angetriebenen Walzen befindet, wobei der Schlauch mit Stützgas gefüllt fortlaufend durch den Heiztunnel und die Walzenpaare geführt wird und wobei die Umfangsgeschwindigkeit der ersten Quetschwalzen im Bereich von 2 bis 10 % grosser ist als die der zweiten Quetschwalzen.

17. Verwendung der schlauchförmigen Verpackungshülle nach einem der Ansprüche 1 bis 16 als künstliche Wursthaut für Dauerwurst.

**Claims**

1. Tubular packaging sheath, in particular an artificial sausage casing, comprising a support tubing based on a fiber-reinforced cellulose hydrate, which contains in its wall 5 to 12 % by weight of water and 18 to 28 % by weight of a chemical substance capable of plasticising cellulose hydrate, each relative to the total weight of the support tubing, and which has a coating of a water-insoluble heat-cured synthetic condensation product based on urea/formaldehyde, melamine/formaldehyde, epichlorohydrin/polyamine or

epichlorohydrin/polyamide-polyamide, wherein the support tubing has a wall thickness corresponding to a weight per unit area of 80 to 110 g/m$^2$, the inner and outer walls of the tubing based on cellulose hydrate contain the condensation product, the inner and outer layers having a thickness corresponding to a weight per unit area of 10 to 100 mg/m$^2$ of substrate surface, and the tubing has a swelling value in the range from 80 to 120 %, the tubular packaging sheath, after soaking in water at about 40 to 50°C for a period of about 30 minutes and subsequent cooling to room temperature, having dimensions in the wet state, in the direction of its longitudinal axis and in the radial direction, which are 2 to 6 %, greater than before soaking in water.

2. A packaging sheath as claimed in Claim 1, wherein the support tubing is formed of cellulose hydrate which has been chemically modified by an organic chemical compound which has at least two N-methylol groups in the molecule.

3. Process for the manufacture of the packaging sheath as claimed in claim 1, in which the surface of a plasticiser-containing tubing of cellulose hydrate gel, prepared by coagulation of viscose, and which has not been subjected to any preceding heat treatment, is treated with a fluid containing a water-soluble precondensate and the tubing is dried by the action of heat, wherein the outside and, optionally, also the inside of the plasticiser-containing tubing of cellulose hydrate gel is/are treated with the fluid containing the pre-condensate, the tubing is, along its longitudinal axis, passed continuously through a first heat-action zone under conditions which permit shrinking and is thus dried, the effective temperature being in the range from 70 to 90°C at the beginning of the heat-action zone and in the range from 100 to 130°C at the end thereof, the tubing is, if appropriate, treated on its inside with the fluid containing the pre-condensate, unless this was already done before drying, and the tubing is passed continuously through a second heat-action zone and is thus dried, the speed of advance of the tubing at the outlet of the second heat-action zone being equal to or at most 2 % greater than that at the inlet to this zone.

4. A process as claimed in claim 3, wherein the speed of advance of the tubing at the outlet of the first heat-action zone is 2 to 10 % lower than that at the inlet to this zone.

5. A process as claimed in claim 3 or claim 4, wherein the tubing of cellulose hydrate gel, which has been treated on its outside and, optionally, also on its inside with a fluid containing a pre-condensate, is passed in a first heat treatment through the roll nip of a pair of squeeze rollers, which is the first in the direction of advance of the tubing and has driven rollers each rotating at the same peripheral speed, the water-insoluble coating of condensation product being formed and the tubing being dried, and is then passed through the roll nip of a second pair of squeeze rollers, which is located at a distance from the first pair and has driven rollers each rotating at the same speed, the rollers of the first pair of squeeze rollers having a peripheral speed which is 2 to 10 % greater than the peripheral speed of the rollers of the second pair of squeeze rollers, and the tubing being filled with supporting gas while passing between the two pairs of squeeze rollers.

6. A process as claimed in any of claims 3 to 5, wherein, during the first heat-action, the tubing is subjected to the action of heat for a period in the range from 1.5 to 3 minutes.

7. A process as claimed in any of claims 3 to 6, wherein the temperature prevailing at the beginning of the second heat-action zone is within the range from 70 to 90°C and that prevailing at the end is within the range from 100 to 130°C.

8. A process as claimed in any of claims 3 to 7, wherein the tubing is subjected to the second heat-action for a period in the range from 1.5 to 3 minutes.

9. A process for the manufacture of the tubular packaging sheath as claimed in claim 1, in which the surface of a plasticiser-containing tubing of cellulose hydrate gel, prepared by coagulation of viscose, and which has not been subjected to any preceding heat treatment, is treated with the fluid containing a water-soluble pre-condensate and the tubing is dried by the action of heat, wherein the plasticiser-containing tubing of cellulose hydrate gel, which has been treated on the outside and inside with the fluid containing a pre-condensate, is subjected to a single action of heat under conditions which permit shrinking of the part of tubing, the temperature prevailing at the beginning of the heat-action zone being in the range from 90 to 110°C and that prevailing at the end being in the range from 140 to 160°C.

10. A process as claimed in claim 9, wherein the speed of advance of the tubing along its longitudinal axis at the outlet of the heat-action zone is 2 to 10 % lower than that at the inlet to this zone.

11. A process as claimed in any of claims 9 or 10 wheein the tubing of cellulose hydrate gel is passed through the roll nip of a pair of squeeze rollers which is the first in the direction of advance of the tubing and has driven rollers each rotating at the same peripheral speed, and is then passed through the roll nip of a second pair of squeeze rollers, which is located at a distance from the first pair and has driven rollers each rotating at the same speed, the rollers of the first pair of squeeze rollers having a peripheral speed which is 2 to 10 % greater than the peripheral speed of the rollers of the second pair of squeeze rollers, and the first pair of squeeze rollers forming the beginning and the second pair of squeeze rollers forming the end, of a zone within which the tubing is filled with supporting gas and is subjected to heat.

12. A process as claimed in any of claims 9 to 11 wherein the tubing is subjected to the action of heat for a period in the range from 3 to 8 minutes.

13. A process for the manufacture of the tubular packaging sheath as claimed in any of claims 1 or 2, in which a tubing of cellulose hydrate gel, prepared by coagulation of viscose, and which has not been subjected to any preceding heat treatment and contains in its wall chemical compounds capable of chemically plasticising cellulose hydrate and a chemical agent, containing at least two N-methylol groups in the molecule, for crosslinking the cellulose hydrate molecules, and the outer and inner surfaces of which have each been treated with a fluid containing a pre-condensate, is dried by the action of heat, wherein the tubing of cellulose hydrate gel is subjected to a single heat-action under conditions which permit shrinking of the part of tubing, the tubing being subjected at the beginning of the heat treatment to a temperature in the range from 70 to 90° C, and at the end, to a temperature in the range from 100 to 130° C.

14. A process as claimed in claim 11, wherein the speed of advance of the tubing along its longitudinal axis at the outlet of the heat-action zone is 2 to 10 % lower than at the inlet to this zone.

15. A process as claimed in any of claims 13 or 14, wherein the tubing is subjected to the action of heat for a period in the range from 1.5 to 3 minutes.

16. A process as claimed in any of claims 13 to 15, wherein the action of heat on the tubing takes place in a heating tunnel which has a first pair of squeeze rollers with driven rollers located at its beginning and a second pair of squeeze rollers with driven rollers located at its end, and the tubing, while filled with supporting gas, is passed continuously through the heating tunnel and the pairs of rollers, and the peripheral speed of the first squeeze rollers is 2 to 10 % greater than that of the second squeeze rollers.

17. Use of the tubular packaging sheath as claimed in any of claims 1 to 16 as an artificial sausage casing for dry sausages.

**Revendications**

1. Enveloppe tubulaire pour emballage, en particulier peau artificielle pour saucisses, constituée d'un boyau porteur en hydrate de cellulose renforcé avec des fibres, qui contient dans sa paroi de 5 à 12 % en poids d'eau, de 18 à 28 % d'une substance chimique capable de plastifier l'hydrate de cellulose, dans chaque cas par rapport au poids total du boyau porteur, avec un revêtement en un produit de condensation synthétique, durcissable à la chaleur, insoluble dans l'eau, à base d'urée-formaldéhyde, de mélamine-formaldéhyde, d'épichlorhydrine-polyamine ou d'épichlorhydrine-polyaminepolyamide, caractérisée en ce que le boyau porteur a une épaisseur de paroi correspondant à un poids par unité de surface de 80 à 110 g/m², en ce que les parois interne et externe du boyau en hydrate de cellulose contiennent le produit de condensation, de telle manière que la couche de revêtement interne et externe ait une épaisseur correspondant à un poids par unité de surface de 10 à 100 mg par m² de surface de substrat, le boyau a une valeur de gonflement de 80 à 120 %, l'enveloppe d'emballage tubulaire ayant, après trempage dans l'eau entre 40 et 50° C environ, pendant une durée d'environ 30 minutes, et refroidissement consécutif à la température ambiante, des dimensions à l'état humide, dans la direction de son axe longitudinal et en direction radiale, qui sont de 2 à 6 % supérieures à celles précédant le trempage dans l'eau.

2. Enveloppe d'emballage selon la revendication 1, caractérisée en ce que le boyau porteur consiste en un hydrate de cellulose chimiquement modifié par un composé chimique organique ayant au moins deux groupes N-méthylol dans la molécule.

3. Procédé de fabrication de l'enveloppe d'emballage selon la revendication 1, dans lequel on traite la surface d'un boyau ou tuyau en gel d'hydrate de cellulose, contenant un plastifiant, préparé par coagulation de viscose, qui n'a encore subi aucun traitement à la chaleur, avec un liquide contenant un pre-condensat soluble dans l'eau, et on sèche le boyau par action de la chaleur, caractérisé en ce qu'on traite la face externe et éventuellement la face interne du boyau en gél d'hydrate de cellulose, contenant un plastifiant, avec le liquide contenant un pré-condensat, on fait passer le boyau en continu dans la direction de son axe longitudinal à travers une première zone d'action de la chaleur dans des conditions permettant un retrait et on le sèche, la température appliquée au début de la zone d'action de la chaleur étant comprise entre 70 et 90° C et à la fin de cette zone entre 100 et 130° C, on traite éventuellement la face interne du boyau avec un liquide contenant un pré-condensat dans la mesure où cette opération n'a pas déjà été effectuée avant le séchage, et on fait passer le boyau en continu par une seconde zone d'action de la chaleur et on le sèche, la vitesse d'avancement du boyau à la sortie de la seconde zone d'action de la chaleur étant égale ou au maximum de 2 % supérieure à la vitesse à l'entrée dans cette zone.

4. Procédé selon la revendication 3, caractérisé en ce que la vitesse d'avancement du boyau à la sortie de la première zone d'action de la chaleur est de 2 à 10 % inférieure à la vitesse à l'entrée dans cette zone.

5. Procédé selon la revendication 3 ou 4, caractérisé en ce qu'on fait passer le boyau en gel d'hydrate de cellulose, traité sur sa face externe et éventuellement sur sa face interne avec un liquide contenant un pré-condensat en formant un revêtement insoluble dans l'eau du produit de condensation et en séchant dans un premier traitement à la chaleur, à travers le pincement d'une première paire de cylindres presseurs dans la direction d'avancement du boyau, avec des cylindres entraînés tournant à la même vitesse périphérique, puis à travers le pincement d'une seconde paire de cylindres presseurs, distante de la première, avec des cylindres entraînés tournant à la même vitesse, les cylindres de la première paire de cylindres presseurs ayant une vitesse périphérique de 2 à 10 % supérieure à la vitesse périphérique des cylindres de la seconde paire de cylindres presseurs, et le boyau entre les deux paires de cylindres presseurs étant rempli d'air de support.

6. Procédé selon l'une quelconque des revendications 3 à 5, caractérisé en ce que, pendant la première action de la chaleur, le boyau est soumis à l'action de la chaleur pendant une durée de 1,5 à 3 minutes.

7. Procédé selon l'une quelconque des revendications 3 à 6, caractérisé en ce qu'au début de la seconde zone d'action de la chaleur, la température est comprise entre 70 et 90°C et à la fin de cette zone la température est comprise entre 100 et 130°C.

8. Procédé selon l'une quelconque des revendications 3 à 7, caractérisé en ce que le boyau subit la seconde action de la chaleur pendant une durée de 1,5 à 3 minutes.

9. Procédé de fabrication de l'enveloppe d'emballage tubulaire selon la revendication 1, dans lequel on traite la surface d'un boyau contenant un plastifiant, en gel d'hydrate de cellulose, préparé par coagulation de viscose, qui n'a encore été soumis à aucun traitement à la chaleur, avec le liquide contenant un pré-condensat soluble dans l'eau et on sèche le boyau par action de la chaleur, caractérisé en ce que le boyau en gel d'hydrate de cellulose, contenant un plastifiant et traité sur ses faces externe et interne avec un liquide contenant un pré-condensat, est soumis à une action unique de la chaleur dans des conditions permettant un retrait de la partie de boyau, la température à l'entrée de la zone d' action de la chaleur étant de 90 à 110°C et la température à la fin de cette zone etant de 140 à 160°C.

10. Procédé selon la revendication 9, caractérisé en ce que la vitesse d'avancement du boyau dans la direction de son axe longitudinal à la sortie de la zone d'action de la chaleur est de 2 à 10 % inférieure à la vitesse d'avancement à l'entrée dans cette zone.

11. Procédé selon la revendication 9 ou 10, caractérisé en ce qu'on fait passer le boyau en gel d'hydrate de cellulose à travers le pincement d'une première paire de cylindres presseurs dans direction d'avancement du boyau, avec des cylindres entraînés tournant chacun à la même vitesse périphérque, puis à travers le pincement d'une seconde paire de cylindres presseurs, distance de la première, avec des cylindres éntraînés tournant chacun à la même vitesse périphérique, les cylindres de la première paire de cylindres presseurs ayant une vitesse périphérique qui est de 2 à 10 % supérieure à la vitesse périphérique des cylindres de la seconde paire de cylindres presseurs et la première paire de cylindres presseurs formant le début et la seconde paire de cylindres presseurs formant la fin d'une zone dans la région de laquelle le boyau est rempli d'air de support et est soumis à la chaleur.

12. Procédé selon l'une quelconque des revendications 9 à 11, caractérisé en ce que le boyau subit l'action de la chaleur pendant une durée de 3 à 8 minutes.

13. Procédé de fabrication de l'enveloppe d'emballage tubulaire selon la revendication 1 ou 2, dans lequel on sèche sous l'action de la chaleur un boyau en gel d'hydrate de cellulose, préparé par coagulation de viscose, qui n'a encore subi aucun traitement à la chaleur et qui contient dans sa paroi des composés chimiques capables de plastifier chimiquement l'hydrate de gel cellulose ainsi qu'un agent chimique avant au moins deux groupes N-éthylol dans la molécule pour la réticulation des molécules d'hydrate de cellulose et dont les surfaces interne et externe sont chacune traitées avec un liquide contenant un pré-condensat, caractérisé en ce qu'on soumet le boyau en gel d'hydrate de cellulose à une unique action de la chaleur, dans des conditions permettant un retrait de la partie de boyau, le boyau étant exposé au début du traitement thermique à une température comprise entre 70 et 90°C et à la fin du traitement thermique à une température comprise entre 100 et 130°C.

14. Procédé selon la revendication 11, caractérisé en ce que la vitesse d'avancement du boyau dans la direction de son axe longitudinal à la sortie de la zone d'action de la chaleur est de 2 à 10 % inférieure à la vitesse à l'entrée dans cette zone.

15. Procédé selon la revendication 13 ou 14, caractérisé en ce que le boyau est soumis à l'action de la chaleur pendant une durée de 1,5 à 3 minutes.

16. Procédé selon l'une quelconque des revendications 13 à 15, caractérisé en ce que l'action de la chaleur sur le boyau a lieu à l'intérieur d'un tunnel de chauffage, à l'entrée duquel se trouve une première paire de cylindres presseurs avec des cylindres entraînés, et à la sortie duquel se trouve une seconde paire de cylindres presseurs avec des cylindres entraînés, le boyau rempli d'air de support passant en continu par le tunnel de chauffage et les paires de cylindres, et la vitesse périphérique de la première paire de cylindres presseurs étant de 2 à 10 % supérieure à celle de la seconde paire de cylindres presseurs.

17. Utilisation de l'enveloppe d'emballage tubulaire selon l'une quelconque des revendications 1 à 16, comme peau artificielle de saucisse pour saucisses à conserver.